# EUROPEAN PATENT APPLICATION

(11) **EP 4 386 017 A1**
(43) Date of publication of application: **19.06.2024**
(21) Application number: 23215412.0
(22) Date of filing: 11.12.2023
(51) Int. Cl.: C08F 136/08, C08L 7/00

(54) **SYNTHETIC POLYISOPRENE AND METHOD OF SYNTHESIZING POLYISOPRENE**

(30) Priority: 14.12.2022 US 202218065676
(71) Applicant: The Goodyear Tire & Rubber Company, Akron, OH 44316 (US); Luxembourg Institute of Science and Technology, 4362 Esch-sur-Alzette (LU)
(72) Inventor: WEYDERT, Marc, 8064 Bertrange (LU); NIKISHKIN, Nicolai, 4362 Esch-sur-Alzette (LU); SHAPLOV, Alexander, 4362 Esch-sur-Alzette (LU)
(74) Representative: Kutsch, Bernd

(57) **Abstract**

A synthetic polyisoprene is disclosed comprising isoprene repeat units comprising 1,4 isoprene repeat units and 3,4 isoprene repeat units, wherein at least 5% of all isoprene repeat units of the synthetic polyisoprene are 3,4 isoprene repeat units, and wherein at least 96% of all 1,4 isoprene repeat units of the synthetic polyisoprene are cis 1,4 isoprene units. Also, a method of manufacturing such a synthetic polyisoprene and its use in a rubber composition is disclosed.

## Description

### Field of the Invention

The present invention is directed to a polyisoprene, a method of manufacturing a polyisoprene and a rubber composition comprising such a polyisoprene. Furthermore, the present invention is directed to an article of manufacture comprising a rubber composition with said polyisoprene, such as a tire.

### Background of the Invention

Various polyisoprenes are known in the art. While polyisoprene is available in the form of natural rubber, there exists also a plurality of synthetic polyisoprenes having different microstructures. Synthetic polyisoprene can typically be made by solution polymerization of isoprene. The isoprene monomer, which is also the structural unit of the natural rubber polymer, can polymerize in four isomeric forms, i. e. in trans 1,4 addition, cis 1,4 addition, 1,2 addition, leaving a pendant vinyl group, and in 3,4 addition. However, different microstructures result in different chemical and/or physical properties of the synthesized polyisoprene. For instance, high contents of isomeric isoprene units, resulting from either trans 1,4 or 1,2 addition are in some applications undesirable due to one or more of limited tear strength, limited tensile strength, limited resilience, varying cure rates, high level of branching and limited compatibility in blends with other diene-based rubbers. Thus, it is desirable to provide new synthetic polyisoprenes improving at least one of the above-mentioned properties.

### Summary of the Invention

The invention relates to a synthetic polyisoprene in accordance with claim 1, to a method of synthesizing a polyisoprene in accordance with claim 9, to a polyisoprene in accordance with claim 13 and to a rubber composition in accordance with claim 14.

Dependent claims refer to preferred embodiments of the invention.

One object of the present invention is to provide a new polyisoprene, preferably having different chemical and/or physical properties and/or structure than existing polyisoprenes.

Another object of the present invention is to provide a synthetic polyisoprene with a relatively high cis 1,4 isoprene content, preferably in combination with contents of other isoprene forms.

Yet another object of the present invention may be to provide a synthetic polyisoprene having a higher glass transition temperature Tg than available so far and/or which is compatible with existing polyisoprenes.

Still another object of the present invention may be to provide a new, preferably efficient method and/or cost effective method, to synthesize polyisoprenes.

Still another object of the present invention may be to provide a polyisoprene with improved compatibility/miscibility with other diene-based rubbers such as polyisoprenes, in particular high-cis-polyisoprenes.

Thus, in a first preferred aspect, the present invention is directed to a (synthetic) polyisoprene which comprises isoprene repeat units comprising 1,4 isoprene repeat units and 3,4 isoprene repeat units, wherein at least 5% of all isoprene repeat units of the synthetic polyisoprene are 3,4 isoprene repeat units, and wherein at least 96% of all 1,4 isoprene repeat units of the synthetic polyisoprene are cis 1,4 isoprene units.

Thus, the inventors have found a new polyisoprene which has a very high degree of cis 1,4 isoprene in its 1,4 isoprene content and at the same time a substantial number of 3,4 isoprene units, which provides a unique microstructure allowing new applications and/or providing improved material properties.

In one preferred embodiment, the glass transition temperature of the polyisoprene is higher than -58°C, preferably higher than -56°C. In particular, the polyisoprene has a relatively high glass transition temperature, in particular compared to existing natural rubber and comparable synthetic polyisoprenes.

In another preferred embodiment, the glass transition temperature Tg of the polyisoprene is within a range of -40°C (preferably -45°C) to -58°C (preferably -55°C). Such a glass transition temperature range allows new blends with existing other diene-based polymers, particularly polyisoprenes such as high-cis polyisoprenes, in case of a given glass transition temperature of the rubber blend or in other words of a rubber composition.

In still another preferred embodiment, the number average molecular weight of the polyisoprene is at least 80,000 g/mol. Thus, the polyisoprene is not only a rather small molecule but has a substantive size.

In still another preferred embodiment, the number average molecular weight of the polyisoprene is within a range of 80,000, preferably 100,000, g/mol to 800,000 g/mol.

In still another preferred embodiment, the synthetic polyisoprene comprises one or more of the following: at least 500 cis 1,4 isoprene repeat units; at least 50 3,4 isoprene repeat units; at most 11,000 cis 1,4 repeat units; at most 6,000 3,4 isoprene repeat units; and at most 20, preferably at most 10, even more preferably less than 5 or even zero, 1,2 isoprene repeat units, preferably zero 1,2 isoprene repeat units.

In still another preferred embodiment, the synthetic polyisoprene comprises one or more of: at least 40% of 1,4 isoprene, by weight or mol%; at least 5% (preferably at least 10%) of 3,4 isoprene, by weight or mol%; from 50% to 95% (preferably from 55% or from 60% to 90% or to 85%) of 1,4 isoprene, by weight or mol%; from 5% to 50% (preferably from 8% or from 10% to 45% or to 40%) of 3,4 isoprene, by weight or mol%; and less than 1%, preferably less than 0.1% or even 0% of 1,2 isoprene, all by weight or mol%.

In still another preferred embodiment, the polyisoprene is functionalized with one or more functional groups, preferably for the coupling to silica. Such a group may be any group known to the person skilled in the art, such as chosen from one or more of hydroxy, carboxy, siloxane, silanol, alkoxy, amine, imine, epoxy or other functional groups.

In still another preferred embodiment, the synthetic polyisoprene comprises, by weight, predominantly 1,4 isoprene, based on the total weight of the synthetic polyisoprene.

In still another preferred embodiment, at least 98%, preferably at least 99.1% or more preferably at least 99.6%, or even more preferably at least 99.9%, or yet more preferably 100% of all 1,4 isoprene repeat units in the polyisoprene are cis 1,4 isoprene repeat units. Such a cis content was not known before. In particular, rather contents up to 95% seemed to be possible.

In still another preferred embodiment, the synthetic polyisoprene has a ratio of weight average molecular weight and number average molecular weight within a range of 1.5 to 10, preferably 2 to 10, more preferably within a range of 2.1 and 9.9, or even more preferably within a range of 2.1 to 5.

In a second preferred aspect, the present invention is directed to a method of synthesizing (or in other words manufacturing or making) a (synthetic) polyisoprene, the method comprising one or more steps of:
(A) providing isoprene monomers;
(B) providing a catalyst comprising an organometallic compound according to formula (I):

   L^{A} L^{B} M X₂ (I)

   wherein M is a (group IV/IVB and/or transition) metal selected from titanium, zirconium and hafnium; X is a ligand independently selected from one or more of a hydrocarbyl or a halogenide (in other words, one X may be different from the other X of the two X ligands); and wherein L^{A} and L^{B} are independently substituted (optionally salicylaldimine) ligands according to formula (II):

      C₆H₄₋ₘ(OH)RₘCH=NC₆H₄₋ₙRₙ (II)
   wherein R is independently selected from hydrogen, a hydrocarbyl substituent, a substituted hydrocarbyl substituent, and a heteroatom substituent, n is selected from 0, 1, 2, 3, and 4, and wherein m is selected from 0, 1, 2, 3, and 4;
(C) activating the catalyst (to obtain an activated catalyst); and
(D) polymerizing the isoprene monomers with said catalyst or said activated catalyst.

It is also possible herein to mention the catalyst, such as mentioned in step (B) as a "precatalyst" which becomes a "catalyst" or activated catalyst upon activation, e.g., by an activator.

In one preferred embodiment, the catalyst has the structure (III), 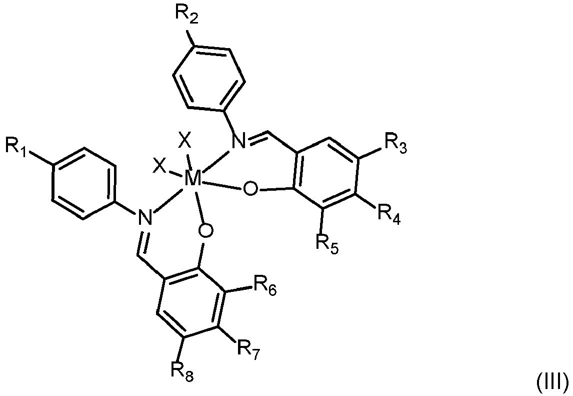 wherein R₁ and R₂ are independently selected from hydrogen, alkyl, aryl, cycloalkyl, hydrocarbyl, ether, an amine group and combined radicals thereof; R₃, R₅, R₆, R₈ are independently selected from alkyl, aryl, cycloalkyl groups, and combined radicals thereof; and wherein R₄, R₇ are independently selected from hydrogen, alkyl, aryl, cycloalkyl, amine groups and combined radicals thereof (preferably with each of R₁ to R₈ containing at most 12 carbon atoms).

It is noted that structures of molecules and/or complexes are shown two-dimensionally in the present description but they may have deviating three-dimensional arrangements or shapes which cannot be fully depicted in the two-dimensional representations as depicted herein.

In another preferred embodiment, the method comprises one or more steps of:
providing a co-catalyst selected from one or more of: triethyl aluminum (TEA), (preferably) triisobutyl aluminum (TIBA), methyl aluminoxane (MAO), and modified methyl aluminoxane (MMAO);
providing an activator selected from one or more of: Li[B(C₆F₅)₄], Ph₃C[B(C₆F₅)₄], PhNMe₂H[B(C₆F₅)₄], Ag[B(C₆F₅)₄], ammonium tetrakis(pentafluorophenyl)borates, B(C₆F₅)₃, and AgSbF₆; and
providing a solvent selected from one or more of (preferably) cyclohexane, (preferably) methyl cyclohexane, hexane, toluene (less preferable) and dichlorobenzene (less preferable).

In still another preferred embodiment, the method comprises one or more of the following steps:
mixing the catalyst, the co-catalyst and optionally the solvent, also optionally at a temperature within a range of 1°C to 50°C, preferably 10°C to 40°C, to obtain a first mixture;
mixing the first mixture with an/the activator, and optionally the solvent, to obtain an/the activated catalyst, optionally at a temperature within a range of 1°C to 50°C, preferably 10°C to 40°C, and so as to obtain a second mixture;
mixing the second mixture with isoprene monomers, optionally with the solvent, and optionally at a temperature within a range of 1°C to 50°C, preferably 10°C to 40°C; and
polymerizing the isoprene monomers at a temperature within a range of 20°C and 70°C, preferably at a temperature from 30°C to 60°C, or even more preferably at a temperature from 35°C to 50°C.

In a third preferred aspect, the present invention is directed to a method of synthesizing (or in other words manufacturing or making) a (synthetic) polyisoprene, the method comprising one or more steps of:
(A) providing isoprene monomers;
(B) providing a catalyst having the structure (III), 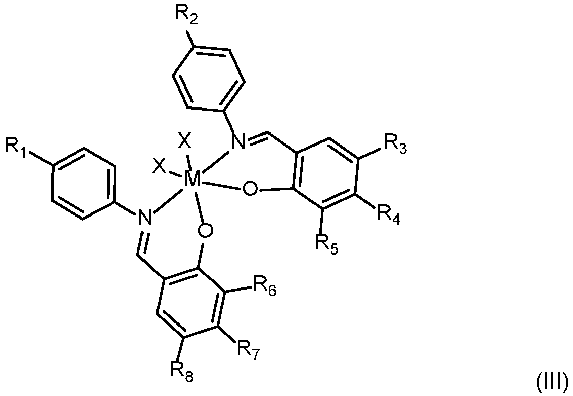 wherein R₁ and R₂ are independently selected from hydrogen, alkyl, aryl, cycloalkyl, hydrocarbyl, ether, an amine group and combined radicals thereof; R₃, R₅, R₆, R₈ are independently selected from alkyl, aryl, cycloalkyl groups, and combined radicals thereof; and wherein R₄, R₇ are independently selected from hydrogen, alkyl, aryl, cycloalkyl, amine groups and combined radicals thereof, containing each at most 12 carbon atoms (preferably with each of R₁ to R₈ containing at most 12 carbon atoms);
(C) activating the catalyst, e.g. by an activator, to obtain an activated catalyst; and
(D) polymerizing the isoprene monomers with said catalyst or activated catalyst.

It is emphasized that embodiments of the second aspect of the invention can also be preferred embodiments of the third aspect of the present invention.

In a fourth preferred aspect of the present invention, the invention is directed to a (synthetic) polyisoprene obtained by the method according to the second or the third aspect of the invention.

In one preferred embodiment, at least 96% of all 1,4 isoprene repeat units in the polyisoprene are cis 1,4 isoprene units, and at least 5% of all isoprene units in the polyisoprene are 3,4 isoprene units.

In particular, the embodiments of the first aspect of the invention can also be preferred embodiments of the fourth aspect of the present invention.

In a fifth preferred aspect of the present invention, a rubber composition comprises at least 5 phr (preferably at least 10 phr) of the synthetic polyisoprene as defined and/or obtained in accordance with one or more of the aforementioned aspects of the present invention (and optionally one or more of the aforementioned embodiments), and optionally at least 20 phr of a filler.

In one preferred embodiment, said rubber composition comprises one or more of:
5 phr to 95 phr (preferably 10 phr to 50 phr, or even more preferably from 10 phr to 45 phr) of the synthetic polyisoprene;
5 phr to 95 phr (preferably 50 phr to 90 phr, or even more preferably from 55 phr to 90 phr) of one or more of i) natural rubber and ii) another polyisoprene such as a high cis 1,4 polyisoprene, wherein high cis means at least 92%, or optionally at least 96%, cis 1,4 content, by weight, and/or 3,4 polyisoprene;

In such a preferred embodiment, the synthetic polyisoprene is combined in a rubber composition with a conventional polyisoprene which particularly allows for an improvement of and/or the adjustment of the rubber / polyisoprene matrix glass transition temperature. This can for instance help to improve the balance of tire tread wear and traction properties, and/or the hysteresis, tear or abrasion balance.

In a preferred embodiment, the rubber composition may include at least one and/or one additional diene-based rubber. Representative synthetic polymers may be the homopolymerization products of butadiene and its homologues and derivatives, for example, methyl butadiene, dimethylbutadiene and pentadiene as well as copolymers such as those formed from butadiene or its homologues or derivatives with other unsaturated monomers. Among the latter may be acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g. acrolein, methyl isopropenyl ketone and vinylethyl ether. Specific examples of synthetic rubbers include neoprene (polychloroprene), polybutadiene (including cis 1,4-polybutadiene), polyisoprene (including cis 1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. Preferred rubber or elastomers may be in general natural rubber, synthetic polyisoprene, polybutadiene and SBR including SSBR or ESBR. The rubbers such as the SBR or SSBR may be functionalized for the coupling to silica.

In a preferred embodiment, a further synthetic or natural polyisoprene rubber may be used. Synthetic cis-1,4-polyisoprene and natural rubber are as such well known to those having skill in the rubber art. In particular, the cis 1,4-microstructure content may be at least 90% and is typically at least 95% or even higher. For the sake of clarity it is noted that such rubber does usually not have a significant 3,4 isoprene content and in particular not such a content in combination with a full or almost full cis-1,4 isoprene content.

In one embodiment, cis-1,4-polybutadiene rubber (BR or PBD) is used. Suitable polybutadiene rubbers may be prepared, for example, by organic solution polymerization of 1,3-butadiene. The BR may be conveniently characterized, for example, by having at least a 90 percent cis-1,4-microstructure content ("high cis" content) and a glass transition temperature (Tg) in a range of from -95 °C to -110°C. Suitable polybutadiene rubbers are available commercially, such as Budene^{®} 1207, Budene^{®} 1208, Budene^{®} 1223, or Budene^{®} 1280 from The Goodyear Tire & Rubber Company. These high cis-1,4-polybutadiene rubbers can for instance be synthesized utilizing nickel catalyst systems which include a mixture of (1) an organonickel compound, (2) an organoaluminum compound, and (3) a fluorine containing compound as described in United States Patent 5,698,643 and United States Patent 5,451,646, which are incorporated herein by reference.

A glass transition temperature, or Tg, of an elastomer represents the glass transition temperature of the respective elastomer in its uncured state. A glass transition temperature of an elastomer composition represents the glass transition temperature of the elastomer composition in its cured state.

The glass transition temperature Tg is determined as a transition midpoint (as the midpoint of the transition region) by a differential scanning calorimeter (DSC) at a temperature rate of increase of 10° C per minute, according to ASTM D3418 or equivalent.

The term "phr" as used herein, and according to conventional practice, refers to "parts by weight of a respective material per 100 parts by weight of rubber, or elastomer". In general, using this convention, a rubber composition is comprised of 100 parts by weight of rubber/elastomer. The claimed composition may comprise other rubbers / elastomers than explicitly mentioned in the claims, provided that the phr value of the claimed rubbers / elastomers is in accordance with claimed phr ranges and the amount of all rubbers / elastomers in the composition results in total in 100 parts of rubber. In an example, the composition may further comprise from 1 phr to 10 phr, optionally from 1 phr to 5 phr, of one or more additional diene-based rubbers, such as SBR, SSBR, ESBR, PBD/BR, NR and/or synthetic polyisoprene. In another example, the composition may include less than 5 phr, preferably less than 3, phr of an additional diene-based rubber or be also essentially free of such an additional diene-based rubber. The terms "compound" and "composition" and "formulation" may be used herein interchangeably, unless indicated otherwise. The terms "rubber" and "elastomer" may also be used herein interchangeably.

Molecular weights of elastomers/rubbers, such as Mn (number average molecular weight), Mw (weight average molecular weight) and Mz (z average molecular weight), are determined herein using gel permeation chromatography (GPC) in THF at 40°C according to ASTM 5296-11 using RI detector and polystyrene calibration standards, or equivalent.

In another embodiment, the rubber composition includes from 1 phr to 80 phr, or from 5 phr to 80 phr, of a resin, preferably having a glass transition temperature Tg greater than 20° C. A Tg for resins is determined as a transition midpoint (as the midpoint of the transition region) by a differential scanning calorimeter (DSC) at a temperature rate of increase of 10° C per minute, according to ASTM D6604 or equivalent.

Preferably, the resin has a softening point above 70° C as determined by ASTM E28 which might sometimes be referred to as a ring and ball softening point. In one embodiment, the rubber composition includes from 10 phr to 60 phr or from 20 phr to 60 phr or from 30 phr to 60 phr of resin.

In a preferred embodiment, the resin is selected from the group consisting of coumarone-indene resin, petroleum hydrocarbon resin, terpene polymers/resins, styrene/alphamethylstyrene resins, terpene phenol resin, rosin derived resins and copolymers and/or mixtures thereof.

A coumarone-indene resin preferably contains coumarone and indene as monomer components making up the resin skeleton (main chain). Monomer ingredients other than coumarone and indene which may be incorporated into the skeleton are, for example, methyl coumarone, styrene, alphamethylstyrene, methylindene, vinyltoluene, dicyclopentadiene, cyclopentadiene, and diolefins such as isoprene and piperlyene. Coumarone-indene resins have preferably softening points ranging from 10° C to 160° C (as measured by the ball-and-ring method). Even more preferably, the softening point ranges from 30° C to 100° C.

Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include any C5 species (olefins and diolefines containing an average of five carbon atoms) such as cyclopentadiene, dicyclopentadiene, diolefins such as isoprene and piperylene, and any C9 species (olefins and diolefins containing an average of 9 carbon atoms) such as vinyltoluene, alphamethylstyrene and indene. Such resins are made by any mixture formed from C5 and C9 species mentioned above, and are known as C5/C9 copolymer resins. Petroleum resins are typically available with softening points ranging from 10° C. to 120° C. Preferably, the softening point ranges from 30 to 100° C.

In one embodiment, C5 resins are aliphatic resins made from one or more of the following monomers: 1,3-pentadiene (e.g., cis or trans), 2-methyl-2-butene, cyclopentene, cyclopentadiene, and dicyclopentadiene.

In another embodiment, a C9 resin is a resin made from one or more aromatic monomers, preferably chosen from the group of indene, methylindene, vinyl toluene, styrene and methylstyrene (such as alpha-methylstyrene).

In still another embodiment, a C9 modified resin is a resin (such as a C5 resin) which has been modified or functionalized with one or more aromatic monomers, preferably chosen from the group of indene, methylindene, vinyl toluene, styrene and methylstyrene (such as alpha methylstyrene).

Terpene resins preferably comprise polymers of at least one of limonene, alpha pinene, beta pinene and delta-3-carene. Such resins are available with softening points ranging from 10° C to 135° C.

Terpene-phenol resins may be derived by copolymerization of phenolic monomers with terpenes such as limonenes, pinenes and delta-3-carene.

Representative for resins derived from rosins and derivatives thereof are, for example, gum rosin, wood rosin and tall oil rosin. Gum rosin, wood rosin and tall oil rosin have similar compositions, although the amount of components of the rosins may vary. Such resins may be dimerized, polymerized or disproportionated. Such resins may be in the form of esters of rosin acids and polyols such as pentaerythritol or glycol.

A styrene/alphamethylstyrene resin is considered herein to be a (preferably relatively short chain) copolymer of styrene and alphamethylstyrene with a styrene/alphamethylstyrene molar ratio in a range of about 0.05 to about 1.50. In one aspect, such a resin can be suitably prepared, for example, by cationic copolymerization of styrene and alphamethylstyrene in a hydrocarbon solvent. Thus, the contemplated styrene/alphamethylstyrene resin can be characterized, for example, by its chemical structure, namely its styrene and alphamethylstyrene contents and by its glass transition temperature, molecular weight and molecular weight distribution.

In one preferred embodiment, said resin is partially or fully hydrogenated.

In a preferred embodiment, the rubber composition further comprises oil, such as processing oil. Oil may be included in the rubber composition as extending oil typically used to extend elastomers. Oil may also be included in the rubber composition by addition of the oil directly during rubber compounding. Oil used may include both extending oil present in the elastomers, and (process) oil added during compounding. Suitable oils may include various oils as are known in the art, including aromatic, paraffinic, naphthenic, vegetable oils, and low PCA oils, such as MES, TDAE, SRAE and heavy naphthenic oils. Suitable low PCA oils may include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Some representative examples of vegetable oils that can be used include soybean oil, sunflower oil, canola (rapeseed) oil, corn oil, coconut oil, cottonseed oil, olive oil, palm oil, peanut oil, and safflower oil. Soybean oil and corn oil are typically preferred vegetable oils. If used, the rubber composition may also include up to 70 phr of processing oil, preferably between 5 phr and 25 phr. Or can be, alternatively less than 10 phr oil, preferably less than 5 phr.

Glass transition temperatures Tg for oils are determined as a transition midpoint (as the midpoint of the transition region) by a differential scanning calorimeter (DSC) at a temperature rate of increase of 10°C per minute, according to ASTM E1356, or equivalent.

In a preferred embodiment, the rubber composition comprises silica. Silica may be for instance pyrogenic/fumed or precipitated silica. In preferred embodiments, precipitated silica is used. Silicas might be characterized, for example, by having a BET surface area, as measured using nitrogen gas. In one embodiment, the BET surface area may be in the range of 40 to 600 square meters per gram. In another embodiment, the BET surface area may be in a range of 50 to 300 square meters per gram. The BET surface area is determined according to ASTM D6556 or equivalent and is described in the Journal of the American Chemical Society, Volume 60, Page 304 (1930). Silica may also be characterized by having a dibutylphthalate (DBP) absorption value in a range of 100 cm³/100g to 400 cm³/100g, alternatively 150 cm³/100g to 300 cm³/100g which is determined according to ASTM D 2414 or equivalent. Silica may have an average ultimate particle size, for example, in the range of 0.01 to 0.05 micron as determined by the electron microscope, although the silica particles may be even smaller, or possibly larger, in size. Ranges of silica use could be for instance between 5 and 200 phr. Various commercially available silicas may be used, such as, only for example herein, and without limitation, silicas commercially available from PPG Industries under the Hi-Sil trademark with designations 210, 315G, and EZ160G; silicas available from Solvay, with, for example, designations of Z1165MP and Premium200MP; and silicas available from Evonik AG with, for example, designations VN2 and Ultrasil 6000GR and 9100GR.

In still another embodiment, the rubber composition may comprise pre-silanized and/or hydrophobated silica which may for instance have a CTAB adsorption surface area of between 130 m2/g and 210 m²/g, optionally between 130 m2/g and 150 m²/g and/or between 190 m2/g and 210 m²/g, or even between 195 m2/g and 205 m²/g. The CTAB (cetyl trimethyl ammonium bromide) method for determination of the silica surface area (ASTM D6845) is known to the person skilled in the art. In another embodiment, pre-silanized silica utilized is hydrophobated prior to its addition to the rubber composition by treatment with at least one silane. Suitable silanes include but are not limited to alkylsilanes, alkoxysilanes, organoalkoxysilyl polysulfides and organomercaptoalkoxysilanes.

Some examples of pre-treated silicas (i.e., silicas that have been pre-surface treated with a silane) which are suitable for use in the practice of this invention include, but are not limited to, Ciptane^{®} 255 LD and Ciptane^{®} LP (PPG Industries) silicas that have been pre-treated with a mercaptosilane, and Coupsil^{®} 8113 (Degussa) that is the product of the reaction between organosilane Bis(triethoxysilylpropyl) polysulfide (Si69) and Ultrasil^{®} VN3 silica, and Coupsil^{®} 6508, Agilon^{®} 400 silica from PPG Industries, Agilon^{®} 454 silica from PPG Industries, and Agilon^{®} 458 silica from PPG Industries.

In one embodiment, where the rubber composition contains conventional/no-pre-silanized silica (in addition to said pre-silanized silica), said rubber composition contains added silica coupler (silica coupler added (separately) to said rubber composition), where said silica coupler has a moiety reactive with hydroxyl groups (e.g. silanol groups) on said silica and said pre-silanized silica and another different moiety interactive with the elastomers of the rubber composition. In one embodiment, said silica coupler added to said rubber composition is comprised of bis(3-triethoxysilylpropyl) polysulfide having an average of from about 2 to about 4 connecting sulfur atoms in its polysulfidic bridge.

Representative of the aforesaid silica coupler (or in other words, silica coupling agent) having a moiety reactive with hydroxyl groups on pre-silanized silica and on silica and another moiety interactive with said elastomers, may be comprised of, for example:
(A) bis(3-trialkoxysilylalkyl) polysulfide containing an average in range of from about 2 to about 4, alternatively from 2 to 2.6 or from 3.2 to 3.8, sulfur atoms in its connecting bridge, or (B) an alkoxyorganomercaptosilane, or (C) their combination.

Representative of such bis(3-trialkoxysilylalkyl) polysulfide is comprised of bis(3-triethoxysilylpropyl) polysulfide. As indicated, for the pre-silanized silica, the silica coupler may be desirably an alkoxyorganomercaptosilane. For the non-pre-silanized silica, the silica coupler may be desirably comprised of the bis(3-triethoxysilylpropyl) polysulfide.

In an embodiment, the rubber composition may include carbon black. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991 grades. These carbon blacks have iodine absorptions ranging from 9 g/kg to 145 g/kg and a DBP number ranging from 34 cm3/100 g to 150 cm3/100 g. Iodine absorption values are determined according to ASTM D1510 or equivalent. Commonly employed carbon blacks can be used as a conventional filler in an amount ranging from 1 phr to 150 phr. In another embodiment, from 1 phr to 50 phr of carbon black may be used. For race tires such content may be significantly higher.

In preferred embodiments, the content of carbon black is at most 10 phr, preferably less than 8 phr or less than 4 phr.

Typically, the carbon black content is at least 0.1 phr.

In a preferred embodiment, the rubber composition may contain sulfur containing organosilicon compounds or silanes. Examples of suitable sulfur containing organosilicon compounds are of the formula:

Z-Alk-Sn-Alk-Z I

in which Z is selected from the group consisting of 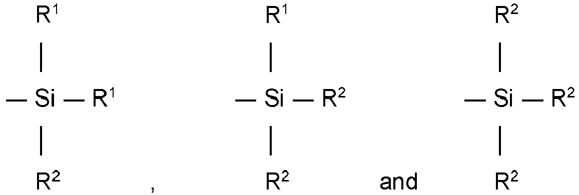
where R₁ is an alkyl group of 1 to 4 carbon atoms, cyclohexyl or phenyl; R₂ is an alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 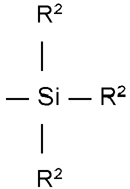
where R² is an alkoxy of 2 to 4 carbon atoms, alternatively 2 carbon atoms; Alk is a divalent hydrocarbon of 2 to 4 carbon atoms, alternatively with 3 carbon atoms; and n is an integer of from 2 to 5, alternatively 2 or 4. In another embodiment, suitable sulfur containing organosilicon compounds include compounds disclosed in United States Patent 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials. In another embodiment, suitable sulfur containing organosilicon compounds include those disclosed in United States Patent Application Publication No. 2003/0130535. In one embodiment, the sulfur containing organosilicon compound is Si-363 from Degussa. The amount of the sulfur containing organosilicon compound in a rubber composition may vary depending on the level of other additives that are used. Generally speaking, the amount of the compound may range from 0.5 phr to 20 phr. In one embodiment, the amount will range from 1 phr to 10 phr.

It is readily understood by those having skill in the art that the rubber composition may be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Some representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively within a range of 1.5 phr to 6 phr. Typical amounts of tackifier resins, if used, comprise for example 0.5 phr to 10 phr, usually 1 phr to 5 phr. Typical amounts of processing aids, if used, comprise for example 1 phr to 50 phr (this may comprise in particular oil). Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, may for example comprise 1 phr to 5 phr. Often microcrystalline waxes are used. Typical amounts of peptizers, if used, may for instance comprise 0.1 phr to 1 phr. Typical peptizers may be, for example, pentachlorothiophenol and dibenzamidodiphenyl disulfide.

Accelerators may be preferably but not necessarily used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients may be typically mixed in at least two stages, namely, at least one nonproductive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). The terms "nonproductive" and "productive" mix stages are well known to those having skill in the rubber mixing art. In an embodiment, the rubber composition may be subjected to a thermomechanical mixing step. The thermomechanical mixing step generally comprises a mechanical working in a mixer or extruder for a period of time, for example suitable to produce a rubber temperature between 140°C and 190°C. The appropriate duration of the thermomechanical working varies as a function of the operating conditions, and the volume and nature of the components. For example, the thermomechanical working may be from 1 to 20 minutes.

In a sixth preferred aspect, the invention is directed to an article of manufacture comprising a rubber composition and/or synthetic polyisoprene in accordance with one or more of the aforementioned aspects.

In a preferred embodiment, the article of manufacture is selected from a tire, a power transmission belt, a hose, a track, an air sleeve, and a conveyor belt. Preferably, it is a tire.

The rubber composition may be incorporated in a variety of rubber components of a tire (or in other words tire components). For example, the rubber component may be a tread (including tread cap and/or tread base), sidewall, apex, chafer, sidewall insert, wirecoat or innerliner.

The tire may for example be a pneumatic tire or nonpneumatic tire, a race tire, a passenger tire, an aircraft tire, an agricultural tire, an earthmover tire, an off-the-road (OTR) tire, a truck tire, or a motorcycle tire. The tire may also be a radial tire or bias tire.

Vulcanization of the pneumatic tire of the present invention may for instance be carried out at conventional temperatures ranging from 100°C to 200°C. In one embodiment, the vulcanization is conducted at temperatures which are within a range of 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

While preferred aspects and embodiments are described herein, the features of all aspects and embodiments may be combined with one another.

### Detailed Description of Preferred Embodiments of the Invention

The inventors have prepared multiple synthetic polyisoprenes in accordance with embodiments of the present invention.

For making such polyisoprenes, the inventors have identified catalysts for polymerizing isoprene monomers to obtain the desired synthetic polyisoprenes.

In a preferred embodiment, said catalysts have the following structure (III): 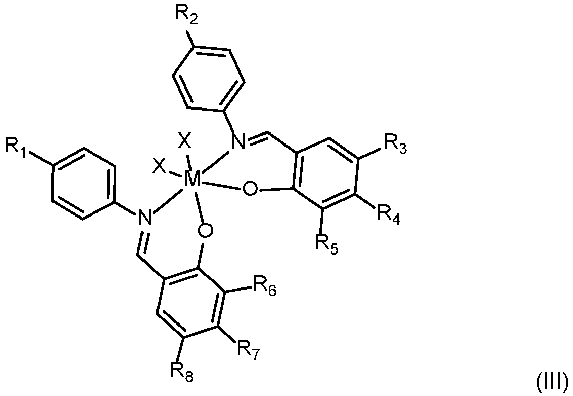 wherein R₁ and R₂ are independently selected from hydrogen, alkyl, aryl, cycloalkyl, hydrocarbyl, ether, an amine group and combined radicals thereof, wherein each of R₁ and R₂ contains at most 12 carbon atoms. R₃, R₅, R₆, R₈ are independently selected from alkyl, aryl, cycloalkyl groups, and combined radicals thereof, with each of R₃, R₅, R₆, R₈ containing at most 12 carbon atoms. R₄ and R₇ are independently selected from hydrogen, alkyl, aryl, cycloalkyl, amine groups and combined radicals thereof, and each contains at most 12 carbon atoms either.

In particular, said catalysts L^{A} L^{B} M X₂ (I), may comprise homoligand (L^{A} = L^{B}) precatalysts or heteroligand (L^{A} ≠ L^{B}) catalysts. Respective examples in accordance with embodiments of the present invention are listed herein below.

In a first embodiment, the catalyst has the below structure Cat1, which corresponds to a homoligand catalyst herein.

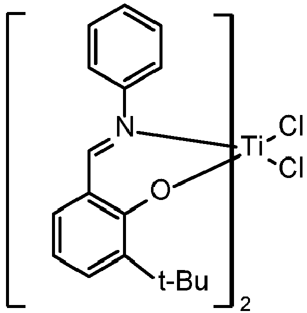

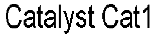

In a second embodiment, the catalyst has the below structure Cat2, which corresponds also to a homoligand catalyst.

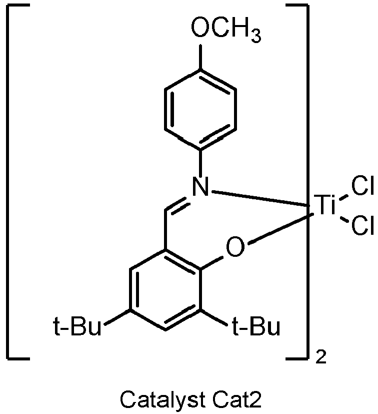

In a third embodiment, the catalyst has the below structure Cat3, which corresponds to a heteroligand catalyst.

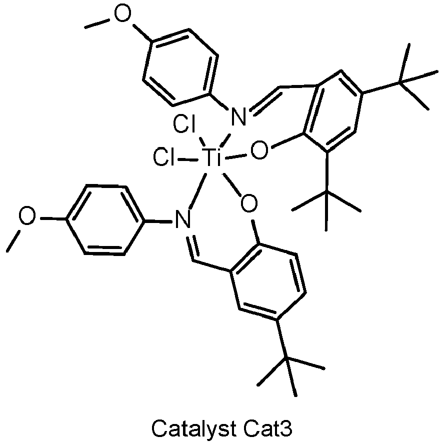

In a fourth embodiment, the catalyst has the below structure Cat4, which corresponds to another heteroligand catalyst.

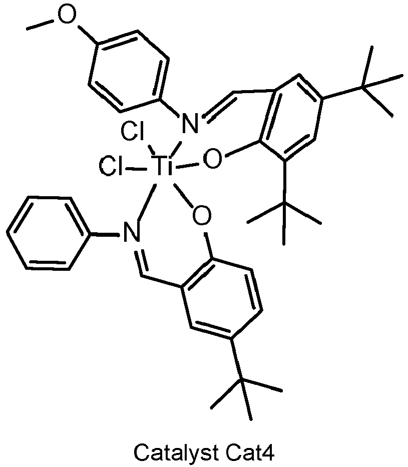

In a fifth embodiment, the catalyst has the below structure Cat5, which corresponds to another homoligand catalyst.

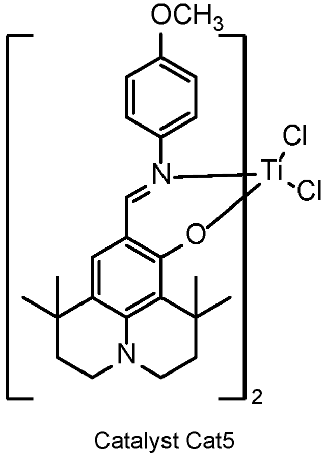

In a sixth non-limiting embodiment, the catalyst has the below structure Cat6, which corresponds to another heteroligand catalyst.

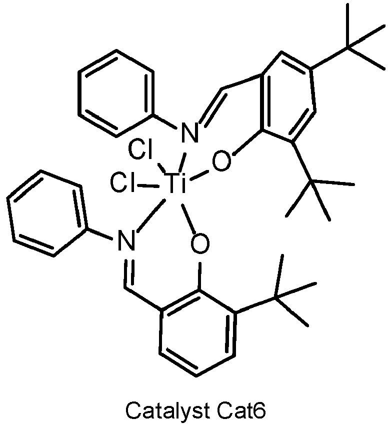

In the aforementioned embodiments, all catalysts are titanium based. However, the present invention is not limited to such a metal only. In particular, other group IV transition metals are also preferred metals.

Catalysts Cat1 to Cat6 have been used to prepare polyisoprenes as listed in Table 1 below. As shown in Table 1, the obtained polyisoprenes have a 3,4 isoprene amount ranging from 11 mol% to 31 mol% and a corresponding 1,4 isoprene content ranging from 69 mol% to 89 mol%. Remarkable is that the content of 1,2 isoprene and trans-1,4 isoprene is zero. The obtained glass transition temperatures are relatively high compared to conventional polyisoprenes known in the art, which allows for instance new applications in rubber compounding. Also the obtained 3,4 isoprene contents in combination with the full cis-1,4 isoprene content (with regard to the absence of trans-1,4 polyisoprene) provides a good miscibility with other diene-based rubbers, in particular natural rubber or synthetic high-cis 1,4 polyisoprene. Glass transition temperatures (Tg) of the non-limiting examples are within the range of -47 to -55 °C and are thus relatively high, in particular compared to natural rubber.

**TABLE 1:**

| **Catalyst** | **Yield (%)** | ***M*ₙ (g mol⁻¹)** | ***M*_{w}/*M*ₙ** | ***T*_{g} (°C)** | ***3,4-IP: 1,4-IP (by mol)*** | ***3,4-IP (mol%)*** | ***1,4-IP (mol%)*** | ***cis:trans (by mol)*** |
|---|---|---|---|---|---|---|---|---|
| Cat1 | >99% | 126 000 | 3.3 | -50 | 1 : 2.4 | 29 | 71 | 1:0 |
| Cat2 | >99% | 492 000 | 2.7 | -55 | 1 : 7.8 | 11 | 89 | 1:0 |
| Cat3 | >99% | 278 000 | 6.8 | -51 | 1 : 2.2 | 31 | 69 | 1:0 |
| Cat4 | >99% | 241 000 | 5.4 | -52 | 1 : 2.2 | 31 | 69 | 1:0 |
| Cat5 | >99% | 654 000 | 2.6 | -47 | 1 : 3.0 | 25 | 75 | 1:0 |
| Cat6 | >99% | 169 000 | 3.6 | -50 | 1 : 4.8 | 17 | 83 | 1:0 |

As a next comparison, below Table 2 compares in further detail the microstructure of various polyisoprenes with respect to their cis-1,4 isoprene, trans-1,4 isoprene, 3,4 isoprene, and 1,2 isoprene contents in (mol) percent. Moreover, the obtained rubber content in polymerization and the respective glass transition temperatures are shown. Natural rubber has a high cis-1,4 isoprene content (typically 100%), but has no 3,4 isoprene as well as possesses a relatively low glass transition temperature in the order of -70°C. Coordination polyisoprene may have different glass transition temperatures, which may also be higher than that of natural rubber. However, often the 3,4 isoprene content is low and the respective polyisoprene will usually have trans-1,4 units. If polyisoprene is synthesized via anionic polymerization, higher 3,4 isoprene amounts may be obtained, but simultaneously the respective polyisoprene has typically a significant trans-1,4 isoprene content and relatively low glass transition temperatures. In accordance with the embodiments of Table 1, which are addressed in the last column of Table 2, the trans-1,4 content is even zero, similarly to natural rubber but with a significant 3,4 isoprene content and a higher glass transition temperature.

**TABLE 2:**

| | **Natural rubber** | **Coordination polyisoprenes** | | | **Anionic polyisoprenes** | | | **Inventive polyisoprenes synthesized using Cat1- Cat6 of TABLE 1** |
|---|---|---|---|---|---|---|---|---|
| | | **Ex. A^{a}** | **SKI-3^{™}** | **Natsyn 2200 ^{™}** | **Ex. B^{b}** | **Ex. C^{c}** | **Cariflex ^{™}** | |
| **cis-1,4-IP [%]** | 100 | 18 | 96 | 98.3 | 36.8 | 76 | 90.9 | 69 to 89 |
| **trans-1,4-IP, [%]** | 0 | 53 | 2 | 1.4 | 36.1 | 18 | 5.2 | 0 |
| **3,4-IP [%]** | 0 | 29 | 2 | 0.3 | 27.1 | 3 | 3.9 | 11 to 31 |
| **1,2-IP [%]** | 0 | 0 | 0 | 0 | 0 | 0 | 0 | 0 |
| **Rubber content [%]** | 94 | >99 | >99 | >99 | >99 | >99 | >99 | >99 |
| **Tg [°C]** | -72.5 | -65 | -71 to -70 | -72 | -56 | -61 to -62 | -60 | -55 to -47 |

| | | | | | | | | |
|---|---|---|---|---|---|---|---|---|
| ^{a} M. Loria, A. Proto, C. Capacchione, RSC Adv., 2015, 5, 65998-66004. ^{b} J.M. Widmaier, G.C. Meyer, Macromolecules, 1981, 14, 450-452. ^{c} K. Ratkanthwar, N. Hadjichristidis, Z. Pudukulathan, Chemistry Journal, 2013, 03, 90-96. | | | | | | | | |

The steps of an example in accordance with the present invention for polymerizing isoprene monomers to the synthetic polyisoprene with the help of the catalyst is shown in below Reaction Scheme A.

In accordance with Reaction Scheme A, the catalyst is first mixed with a co-catalyst in a solvent (step i)). In the present example, the co-catalyst is TIBA (triisobutylaluminum), but could also be an alternative material, e.g., as mentioned herein above. Preferably, this first step is carried out at room temperature although other temperatures may be possible as also listed herein above. As solvent, cyclohexane is used in the present non-limiting embodiment.

In a next step (step ii)), the mixture of the catalyst, co-catalyst and solvent is further mixed with Li[B(CeF₅)₄] (Lithiumtetrakis(pentafluorophenyl)borate or also known as LiFABA), which is an example of an activator, activating the catalyst so as to obtain an activated and/or cationic catalyst.

In a further step, the activated catalyst is mixed, still in the solvent cyclohexane, with isoprene (monomers) so as to obtain the synthetic polyisoprene. In this example, polymerization takes place at a temperature of 40°C. Other temperatures are in principle possible. The cis-1,4 isoprene units and 3,4 isoprene units in Reaction Scheme A are typically not distributed in two blocks of such types of units. Rather, cis-1,4 isoprene and 3,4 isoprene units may partially alternate and/or be random. The exact structure and/or sequence of such units is not deemed of particular interest herein. Molecular weights (Mn) typically obtained by the method in accordance with an embodiment of the invention are within a range of 100,000 g/mol to 800,000 g/mol.

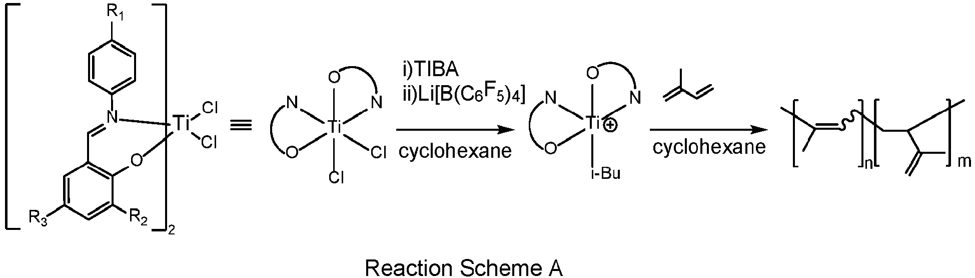

It is noted that a person skilled in the art could polymerize the synthetic polyisoprene with the above description and knowledge of Reaction Scheme A. Merely for the sake of providing specific examples, further non-limiting details are provided below. It is emphasized that multiple of the provided details could be adapted according to available equipment and chemistry and/or with regard to the scale of polymer needed.

In a first polymerization example, utilized materials include: isoprene, Ti(L₁)₂Cl₂, triisobutylaluminum (TIBA), Lithium tetrakis(pentafluorophenyl)borate (LiFABA) at a molar ratio of 200/1/5/1 (in the same order of materials), wherein Ti(L₁)₂Cl₂ corresponds to Cat2 mentioned herein above. In particular, Ti(L₁)₂Cl₂ (79.4 mg, 0.1 mmol) is loaded in a Schlenk flask under inert atmosphere and the toluene solution of TIBA (0.5 mmol, 0.45 mL of 1.1 M solution in toluene) is added at room temperature. Stirring is continued at room temperature for 1 h and an obtained dark green solution is transferred to another Schlenk flask containing the LiFABA (64.8 mg, 0.1 mmol). The reaction mixture is stirred for additional 5-10 min at room temperature and the 6.67 M solution of isoprene in anhydrous cyclohexane (3 mL, 20 mmol) is added to the activated catalyst. The temperature is increased to 40°C and stirring is continued for 24 h. The resultant viscous solution is diluted with 10 mL of dichloromethane and precipitated in excess of acidic methanol (5% HCl). Polyisoprene is collected by filtration, washed with acetone, and dried at 55°C/0.3 mbar for 8 h.

A second polymerization example involves isoprene/Ti(L₁L₂)Cl₂/TIBA/LiFABA at a molar ratio of 200/1/5/1, and a catalyst of the type Ti(L₁L₂)Cl₂. Said catalyst (70.9 mg, 0.1 mmol) is loaded in a Schlenk flask under inert atmosphere and toluene solution of TIBA (0.5 mmol, 0.45 mL of 1.1 M solution in toluene) is added to it at room temperature. Stirring is continued at room temperature for 1 h and the obtained solution is transferred to another Schlenk flask containing the LiFABA (64.8 mg, 0.1 mmol). The reaction mixture is stirred for additional 5-10 min at room temperature and the 6.67 M solution of isoprene in anhydrous cyclohexane (3 mL, 20 mmol) is added to the activated catalyst. The temperature is increased to 40°C and stirring is continued for 24 h. The resulting viscous solution is diluted with 10 mL of dichloromethane and precipitated in excess of acidic methanol (5% HCl). Polyisoprene is collected by filtration, washed with acetone, and dried at 55°C/0.3 mbar for 8 h.

As for the polymerization process, with regard to suitable catalysts, there are various ways to prepare those in accordance with embodiments of the invention. Some non-limiting ways are demonstrated herein below. However, a person skilled in the art would be able to synthesize such materials using different steps, chemicals, conditions and equipment upon reading the present description.

In a first example of preparing a catalyst, a homoligand titanium complexe [(L1)₂TiCl₂] is prepared. To a stirred 0.1 M solution of substituted salicylidene aldimine, (E)-2,4-di-tert-butyl-6-(((4-methoxyphenyl)imino)methyl)phenol (678 mg, 2 mmol, in 20 mL of anhydrous tetrahydrofuran (THF)) the BuLi (2 mmol, 0.8 mL of 2.5 M solution in hexane) is added at - 60°C under inert atmosphere. The resulting solution is stirred for 1h at-60°C, whereupon TiCl₄ (1 mmol, 1 mL of 1 M solution in toluene) is added. The mixture is allowed to warm to room temperature (22°C) and stirring is continued for 2-3 hours. After removal of all volatiles under reduced pressure, the residue is dissolved in 20 mL of the mixture of anhydrous CH₂Cl₂ and cyclohexane (1:1 by volume). The precipitate is filtered off and the volume of the filtrate is reduced 10 times before placing in a freezer for crystallization. After 10-15h at -18°C, the titanium complex is obtained as deep red crystals that are filtered under inert atmosphere and dried at 22°C/0.3 mbar for 20 h.

In a second non-limiting example, heteroligand titanium complexes [(L₁L₂)TiCl₂] are prepared. To a stirred 0.1 M solution of substituted salicylidene aldimine, (E)-2,4-di-tert-butyl-6-(((4-methoxyphenyl)imino)methyl)phenol (Ligand 1, L1) (339 mg, 1 mmol) in 10 mL of anhydrous tetrahydrofuran (THF)) the BuLi (1 mmol, 0.4 mL of 2.5 M solution in hexane) is added dropwise at -60°C under inert atmosphere. The resulting solution is stirred for 1 h at - 60°C, whereupon it is warmed up to 0°C and Me₃SiCl (0.13 mL, 1 mmol) is added dropwise. The mixture is allowed to further warm up to room temperature, is stirred for 1 h at room temperature and then is again cooled down to -50°C. To thus obtained solution the TiCl₄ (1 mmol, 1 mL of 1 M solution in toluene) is added dropwise at -50°C. The mixture is stirred for 1 h -50°C to form a monoligated titanium complex. Then, a second substituted salicylidene aldimine, (E)-2-(tert-butyl)-6-((phenylimino)methyl)phenol (Ligand 2, L2), (253 mg, 1 mmol) is deprotonated in a separate flask with BuLi (1 mmol, 0.4 mL of 2.5 M solution in hexanes) in 10 mL of anhydrous THF using exactly the same procedure as for Ligand 1. The obtained solution of lithiated Ligand 2 is added to the solution of monoligated titanium complex via cannula at -50°C. The mixture is allowed to warm to room temperature and the stirring is continued overnight. After removal of all the volatiles under reduced pressure, the residue is dissolved in 20 mL of a mixture of anhydrous CH₂Cl₂ and cyclohexane (1:1 by volume) (same volume as in the reaction). The precipitate is filtered off and the volume of the filtrate is reduced 10 times before placing in the freezer for crystallization. After 10-15 h at -18°C, the titanium complex is obtained as crystals that are filtered under inert atmosphere and dried at room temperature/0.3 mbar for 20 h.

## Claims

1. A synthetic polyisoprene comprising isoprene repeat units comprising 1,4 isoprene repeat units and 3,4 isoprene repeat units,
wherein at least 5% of all isoprene repeat units of the synthetic polyisoprene are 3,4 isoprene repeat units, and
wherein at least 96% of all 1,4 isoprene repeat units of the synthetic polyisoprene are cis 1,4 isoprene units.

2. The synthetic polyisoprene according to claim 1, wherein the glass transition temperature of the polyisoprene is higher than -58°C or is within a range of from -40°C to - 55°C.

3. The synthetic polyisoprene according to at least one of the previous claims, wherein the number average molecular weight of the polyisoprene is at least 80,000 g/mol or wherein the number average molecular weight of the polyisoprene is within a range of from 100,000 g/mol to 800,000 g/mol.

4. The synthetic polyisoprene according to at least one of the previous claims, comprising one or more or all of:
at least 500 cis 1,4 isoprene repeat units;
at least 50 3,4 isoprene repeat units;
at most 11,000 cis 1,4 isoprene repeat units;
at most 6,000 3,4 isoprene repeat units; and
at most 10 1,2 isoprene repeat units.

5. The synthetic polyisoprene according to at least one of the previous claims, comprising one or more or all of:
at least 40% of 1,4 isoprene, by weight;
at least 10% of 3,4 isoprene, by weight;
from 50% to 95% of 1,4 isoprene, by weight;
from 5% to 50% of 3,4 isoprene, by weight.

6. The synthetic polyisoprene according to at least one of the previous claims, which comprises, by weight, predominantly 1,4 isoprene based on the total weight of the synthetic polyisoprene.

7. The synthetic polyisoprene according to at least one of the previous claims, wherein at least 99.1% or at least 99.9% of all 1,4 isoprene repeat units in the polyisoprene are cis 1,4 isoprene repeat units.

8. The synthetic polyisoprene according to at least one of the previous claims, having a ratio of weight average molecular weight and number average molecular weight within a range of from 2 to 5.

9. A method of synthesizing a polyisoprene, the method comprising at least the steps of:
(A) providing isoprene monomers;
(B) providing a catalyst comprising an organometallic compound according to formula (I):
L^{A} L^{B} M X₂ (I)
wherein M is a metal selected from titanium, zirconium and hafnium; X is a ligand independently selected from one or more of a hydrocarbyl and a halogenide; and wherein L^{A} and L^{B} are independently substituted ligands according to formula (II):
C₆H₄₋ₘ(OH)RₘCH=NC₆H₄₋ₙRₙ (II)
wherein R is independently selected from hydrogen, a hydrocarbyl substituent, a substituted hydrocarbyl substituent, and a heteroatom substituent, n is selected from 0, 1, 2, 3, and 4, and wherein m is selected from 0, 1, 2, 3, and 4;
(C) activating the catalyst to obtain an activated catalyst; and
(D) polymerizing the isoprene monomers with said activated catalyst.

10. The method according to claim 9, wherein the catalyst has the structure (III), 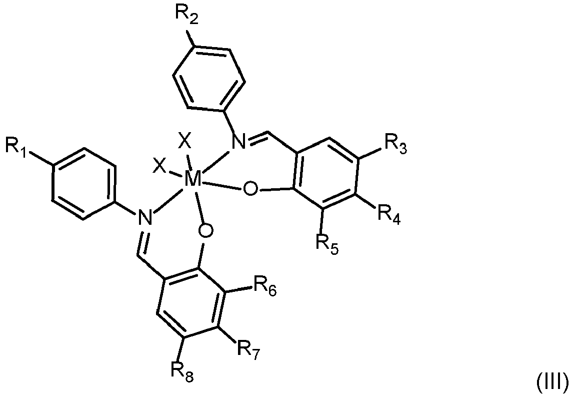 wherein R₁ and R₂ are independently selected from hydrogen, alkyl, aryl, cycloalkyl, hydrocarbyl, ether, an amine group and combined radicals thereof, each of R₁ and R₂ containing at most 12 carbon atoms; R₃, R₅, R₆, R₈ are independently selected from alkyl, aryl, cycloalkyl groups, and combined radicals thereof, each of R₃, R₅, R₆, R₈ containing at most 12 carbon atoms; and wherein R₄, R₇ are independently selected from hydrogen, alkyl, aryl, cycloalkyl, amine groups and combined radicals thereof, each of R₄, R₇ containing at most 12 carbon atoms.

11. The method of claim 9 or 10, further comprising one or more or all of the steps:
providing a co-catalyst selected from one or more of: triethyl aluminum (TEA), triisobutyl aluminum (TIBA), methyl aluminoxane (MAO), and modified methyl aluminoxane (MMAO);
providing an activator selected from one or more of: Li[B(CeF₅)₄, Ph₃C[B(CeF₅)₄], PhNMe₂H[B(C₆F₅)₄], ammonium tetrakis(pentafluorophenyl)borates and B(C₆F₅)₃; and
providing a solvent selected from one or more of cyclohexane, methyl cyclohexane, hexane, toluene and o-dichlorobenzene.

12. The method of at least one of the claims 9 to 11, further comprising one or more or all of the steps:
mixing the catalyst, the co-catalyst and the solvent at a temperature within a range of from 1°C to 50°C to obtain a first mixture;
mixing the first mixture with the activator to obtain the activated catalyst, at a temperature within a range of from 1°C to 50°C, thereby obtaining a second mixture;
mixing the second mixture with the isoprene monomers;
polymerizing the isoprene monomers at a temperature within a range of from 20°C to 70°C.

13. A polyisoprene obtained by the method according to at least one of the claims 9 to 12, and, preferably, wherein at least 96% of all 1,4 isoprene repeat units in the polyisoprene are cis 1,4 isoprene units, and wherein at least 5% of all isoprene units in the polyisoprene are 3,4 isoprene units.

14. A rubber composition comprising at least 5 phr of the synthetic polyisoprene according to at least one of the claims 1 to 8 and at least 20 phr of a filler.

15. The rubber composition according to claim 14, comprising one or more or all of:
5 phr to 95 phr, alternatively 10 phr to 45 phr, of said synthetic polyisoprene;
5 phr to 95 phr, alternatively 55 to 90 phr, of one or more of natural rubber and another polyisoprene; and
0 phr to 90 phr, alternatively 0 to 10 phr or 3 to 10 phr, of one or more further diene based rubbers.
